(19) 

Europäisches
Patentamt
European
Patent Office
Office européen
des brevets

(11) **EP 3 961 986 A1**

(12) **EUROPEAN PATENT APPLICATION**
published in accordance with Art. 153(4) EPC

(43) Date of publication:
**02.03.2022 Bulletin 2022/09**

(21) Application number: **20795141.9**

(22) Date of filing: **22.04.2020**

(51) International Patent Classification (IPC):
***H04L 12/24*** *(2006.01)*

(52) Cooperative Patent Classification (CPC):
**H04W 24/02; H04W 24/06**

(86) International application number:
**PCT/CN2020/086036**

(87) International publication number:
**WO 2020/216232 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.04.2019 CN 201910323228**

(71) Applicant: **ZTE Corporation
Shenzhen, Guangdong 518057 (CN)**

(72) Inventors:
• **YAN, Wenming
Shenzhen, Guangdong 518057 (CN)**
• **GUO, Feng
Shenzhen, Guangdong 518057 (CN)**

(74) Representative: **Ipsilon
Le Centralis
63, avenue du Général Leclerc
92340 Bourg-la-Reine (FR)**

(54) **ADAPTIVE CONFIGURATION METHOD AND DEVICE OF NETWORK**

(57) Embodiments of the present disclosure disclose an adaptive configuration method and apparatus for a network. The method includes: determining the $i^{th}$ value of N network parameters of the network; determining, according to X basic KPIs obtained after running with the $i^{th}$ value of the N network parameters and X baseline basic KPIs, whether to update the X baseline basic KPIs; determining, according to a block error rate, the X basic KPIs obtained after running with the $i^{th}$ value of the N network parameters and the X baseline basic KPIs, a gain corresponding to the $i^{th}$ value of the N network parameters; and determining, according to the gain corresponding to each value of the N network parameters, an optimal value of the N network parameters as the value corresponding to the maximum gain.

Determine the $i^{th}$ value of N network parameters of the network, where i is an integer greater than or equal to 1 — 100

Determine, according to X basic KPIs obtained after running with the $i^{th}$ value of the N network parameters and X baseline basic KPIs, whether to update the X baseline basic KPIs, where N and X are integers greater than or equal to 1 — 101

Determine, according to a block error rate, the X basic KPIs obtained after running with the $i^{th}$ value of the N network parameters and the X baseline basic KPIs, a gain corresponding to the $i^{th}$ value of the N network parameters — 102

Determine, according to the gain corresponding to each value of the N network parameters, an optimal value of the N network parameters as the value corresponding to the maximum gain — 103

FIG. 1

EP 3 961 986 A1

**Description**

TECHNICAL FIELD

Embodiments of the present disclosure relate to, but are not limited to, the field of communications, and particularly relates to an adaptive configuration method and apparatus for a network.

BACKGROUND

The Narrow Band Internet of Things (NB-IoT) is a novel IoT protocol, and a wireless transceiving technology implementing a 180K hertz (Hz) carrier based on Frequency Division Duplex (FDD) Long Term Evolution (LTE). The current commercial versions of NB-IoT base stations have met NB-IoT protocol version 13, 14 (Rell3, 14) and support NB-IoT network deployments, and existing Global System for Mobile Communication (GSM) devices and GL (GSM LTE or 2G 4G) devices can be upgraded to support NB-IoT.

With regards to equipment activation, one of the common practices currently adopted in the industry is to follow previous methods for LTE, and after activation, configuration of the network parameters needs to be continuously optimized and adjusted manually, which wastes a great deal of manpower.

SUMMARY

An embodiment of the present disclosure provides an adaptive configuration method for a network, including: determining the $i^{th}$ value of N network parameters of the network, where i is an integer greater than or equal to 1; determining, according to X basic KPIs obtained after running with the $i^{th}$ value of the N network parameters and X baseline basic KPIs, whether to update the X baseline basic KPIs, where N and X are integers greater than or equal to 1; determining, according to a block error rate, the X basic KPIs obtained after running with the $i^{th}$ value of the N network parameters and the X baseline basic KPIs, a gain corresponding to the $i^{th}$ value of the N network parameters; and determining, according to the gain corresponding to each value of the N network parameters, an optimal value of the N network parameters as the value corresponding to the maximum gain.

An embodiment of the present disclosure provides an adaptive configuration apparatus for a network, including: a network parameter value determination module configured to determine the $i^{th}$ value of N network parameters of the network, where i is an integer greater than or equal to 1; a baseline basic KPI updating module configured to determine, according to X basic KPIs obtained after running with the $i^{th}$ value of the N network parameters and X baseline basic KPIs, whether to update the X baseline basic KPIs, where N and X are integers greater than or equal to 1; a gain determination module configured to determine, according to a block error rate, the X basic KPIs obtained after running with the $i^{th}$ value of the N network parameters and the X baseline basic KPIs, a gain corresponding to the $i^{th}$ value of the N network parameters; and a network parameter optimal value determination module configured to determine, according to the gain corresponding to each value of the N network parameters, an optimal value of the N network parameters as the value corresponding to the maximum gain.

An embodiment of the present disclosure provides an adaptive configuration apparatus for a network, including a processor, and a computer readable storage medium having instructions stored thereon which, when executed by the processor, cause the adaptive configuration method for a network according to the embodiments the present disclosure to be implemented.

An embodiment of the present disclosure provides a computer readable storage medium having a computer program stored thereon which, when executed by a processor, causes the processor to implement the adaptive configuration method for a network according to the embodiments the present disclosure.

BRIEF DESCRIPTION OF DRAWINGS

Accompanying drawings are provided for further understanding of the technical solution of the embodiments of the disclosure and constitute a part of the specification. Hereinafter, these drawings are intended to explain the technical solution of the embodiments of the disclosure together with the following exemplary embodiments, but should not be considered as a limitation to the technical solution of the embodiments of the disclosure. In the drawings:

FIG. 1 is a flowchart of an adaptive configuration method for a network according to the present disclosure;
FIG. 2 is a flowchart of another adaptive configuration method for a network according to the present disclosure;
FIG. 3 is a flowchart of another adaptive configuration method for a network according to the present disclosure;
FIG. 4 is a flowchart of another adaptive configuration method for a network according to the present disclosure;
FIG. 5 is a schematic diagram showing structural components of an adaptive configuration apparatus for a network according to the present disclosure; and

FIG. 6 is a schematic diagram showing architecture of a base station according to the present disclosure.

## DETAIL DESCRIPTION OF EMBODIMENTS

Embodiments of the present disclosure will be described in detail below with reference to the accompanying drawings. It should be noted that the embodiments of the disclosure and features herein may be combined with each other in any manner as long as they are not contradictory.

The steps illustrated in the flowchart of the drawings may be executed in a computer system such as a set of computer executable instructions. Also, although a logical order is shown in the flowchart, in some cases, the steps shown or described may be performed in a different order than illustrated herein.

After an NB-IoT network cuts over to access a network, a set of system default network parameter configuration is adopted upon activation. However, the actual application scenarios of the NB-IoT network are varied, including such as water meters, electric meters, lamp poles, manhole covers and the like, and different application scenarios bring about different degrees of interference in the network, including interference from an outside environment of the application scenario, other types of wireless networks and a configuration density of base stations. Therefore, it is very possible that the system default network parameter configuration is not suitable for the current practical network operation condition, and automatic adjustment of the network parameters is required.

The present disclosure, using an Adaptive Modulation Control (AMC) intelligent parameter adjustment algorithm, performs network parameter training within a value range of N network parameters to obtain optimal values of the N network parameters.

For example, the Markov Decision Process (MDP) is a basic theory of reinforcement learning. In general, an MDP can be represented by a quadruplet: (1) S represents a state space; (2) A represents an action space; (3) R represents a reward function; (4) P represents an ambient state transfer function.

Each set of the N network parameters takes the value $S = [s_1, s_2, ..., s_i, ...s_n]$, where $s_i$ represents a value of the $i^{th}$ network parameter. The network parameter adjustment direction is A (including three actions, i.e., maintaining, increasing by one step and decreasing by one step for each network parameter, which can be regarded as a discrete finite set), a difference between an adjusted composite KPI (i.e., key performance indicator) and a baseline composite KPI is indicated by R, while P represents a probability of one set of values S1 of the network parameters being transferred to the other set of values S2.

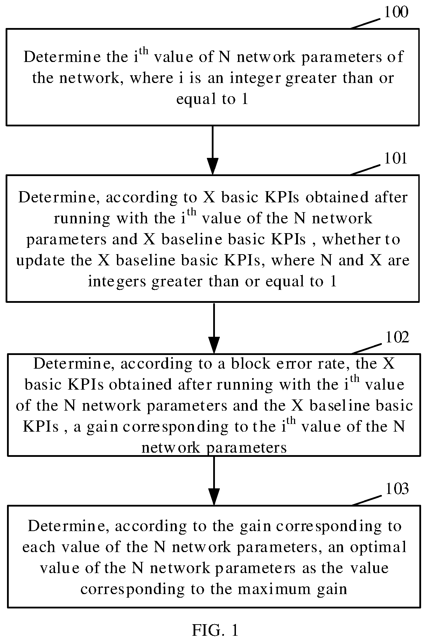

Referring to FIG. 1, the present disclosure proposes an adaptive configuration method for a network, which includes the following steps 100 to 103.

At step 100, determining the $i^{th}$ value of N network parameters of the network, where i is an integer greater than or equal to 1.

In the present disclosure, the network may refer to a network covered by one or more cells.

In the present disclosure, the network may be any network, such as an NB-IoT network.

In the present disclosure, the N network parameters are network parameters having strong correlation with the composite KPI or basic KPI.

The N network parameters with strong correlation with the composite KPI or basic KPI may be obtained through simulation. For example, when the composite KPI is calculated from two basic KPIs (such as an uplink effective throughput rate of an NB-IoT cell signaling radio bearer (SRB) and a downlink effective throughput rate of an NB-IoT cell SRB), the obtained N network parameters having strong correlation with the composite KPI or basic KPI through simulation include: the maximum repeated number of UE-specific search space (USS), a start subframe of USS, the repeated number of Message 4 (MSG4) hybrid automatic repeat request (HARQ), and so on.

In the present disclosure, the $1^{st}$ value of the N network parameters may be a value of a default configuration, the $i^{th}$ value of the N network parameters may be obtained by an offline learning method, and the $i^{th}$ value of the N network parameters is in an initial value range of the N network parameters.

At step 101, determining, according to X basic KPIs obtained after running with the $i^{th}$ value of the N network parameters and X baseline basic KPIs, whether to update the X baseline basic KPIs, where N and X are integers greater than or equal to 1.

In the present disclosure, when the adaptive configuration of the network parameters is performed for the first time, the X baseline basic KPIs are obtained after running with the value of the default configuration of the N network parameters, and the subsequent X baseline basic KPIs are obtained by updating with the X basic KPIs obtained after running with actual values of the N network parameters.

In the present disclosure, determining, according to X basic KPIs obtained after running with the $i^{th}$ value of the N network parameters and X baseline basic KPIs, whether to update the X baseline basic KPIs includes at least one of: updating the X baseline basic KPIs to the X basic KPIs obtained after running with the $i^{th}$ value of the N network parameters, when a difference between a composite KPI corresponding to the X basic KPIs obtained after running with the $i^{th}$ value of the N network parameters and a baseline composite KPI corresponding to the X baseline basic KPIs is greater than or equal to a preset threshold value; or keeping the X baseline basic KPIs unchanged when the difference between the composite KPI corresponding to the X basic KPIs obtained after running with the $i^{th}$ value of the N network parameters and the baseline composite KPI corresponding to the X baseline basic KPIs is smaller than the preset threshold value.

In the present disclosure, the composite KPI is calculated from the X basic KPIs and weights corresponding to the basic KPIs. X is an integer greater than or equal to 1. That is, the composite KPI is a weighted average of the X basic KPIs.

The basic KPI may be any one or more KPIs, including, for example, a cell radio resource control (RRC) setup success rate, a cell S1 interface UE related logic signaling connection setup success rate, a cell wireless drop rate, a cell media access control (MAC) layer uplink block error rate, a cell MAC layer downlink block error rate, a cell eNodeB paging congestion rate, and the like.

Different operators may employ different basic KPIs.

At step 102, determining, according to a block error rate, the X basic KPIs obtained after running with the $i^{th}$ value of the N network parameters and the X baseline basic KPIs, a gain corresponding to the $i^{th}$ value of the N network parameters.

In the present disclosure, determining, according to the block error rate, the X basic KPIs obtained after running with the $i^{th}$ value of the N network parameters and the X baseline basic KPIs, the gain corresponding to the $i^{th}$ value of the N network parameters includes: determining, according to a block error rate, the X basic KPIs obtained after running with the $i^{th}$ value of the N network parameters and the X baseline basic KPIs, a reward function corresponding to the $i^{th}$ value of the N network parameters; and determining, according to the reward function corresponding to the $i^{th}$ value of the N network parameters, the gain corresponding to the $i^{th}$ value of the N network parameters.

In the present disclosure, determining, according to the block error rate, the X basic KPIs obtained after running with the $i^{th}$ value of the N network parameters and the X baseline basic KPIs, the reward function corresponding to the $i^{th}$ value of the N network parameters includes at least one of: calculating, when the block error rate (BLER) is in a preset range, the reward function corresponding to the $i^{th}$ value of the N network parameters according to a formula

$$R_i = \sum_j w_j \times norm\left(KPI_{j,real} - KPI_{j,target}\right)$$

, where $R_i$ is the reward function corresponding to the $i^{th}$ value of the N network parameters, $w_j$ is the weight of the $j^{th}$ basic KPI, $KPI_{j,real}$ is the $j^{th}$ basic KPI obtained after running with the $i^{th}$ value of the N network parameters, $KPI_{j,target}$ is the $j^{th}$ baseline basic KPI, and norm (X) is the normalization of X; or determining, when the block error rate is not in the preset range, the reward function corresponding to the $i^{th}$ value of the N network parameters as a preset value (e.g., -100), where the preset value is smaller than 0.

In the present disclosure, the step of determining, according to the reward function corresponding to the $i^{th}$ value of the N network parameters, the gain corresponding to the $i^{th}$ value of the N network parameters includes: calculating the gain corresponding to the $i^{th}$ value of the N network parameters according to a formula $Q(S_i, A_i) = Q(S_{i-1}, A_{i-1}) + \alpha \llcorner R_{i-1} + \gamma R_i - Q(S_{i-1}, A_{i-1}) \lrcorner$ where $Q(S_i, A_i)$ is a gain corresponding to the $i^{th}$ value of the N network parameters, $S_i$ is the $i^{th}$ value of the N network parameters, $A_i$ is an action corresponding to the $i^{th}$ value of the N network parameters, $Q(S_{i-1}, A_{i-1})$ is a gain corresponding to the $(i-1)^{th}$ value of the N network parameters, $S_{i-1}$ is the $(i-1)^{th}$ value of the N network parameters, $A_{i-1}$ is an action corresponding to the $(i-1)^{th}$ value of the N network parameters, $R_{i-1}$ is a reward function corresponding to the $(i-1)^{th}$ value of the N network parameters, $R_i$ is a reward function corresponding to the $i^{th}$ value of the N network parameters, $\alpha$ is a learning rate, and $\gamma$ is a discount rate.

In the above method, the reward function $R_i$ needs to first judge whether the current state meets the expected block error rate (i.e., whether it is within a preset range) according to the BLER value. When the BLER is within a normal operating range (i.e., within the preset range), the reward function $R_i$ is a difference between a current KPI statistical value and a baseline value, which has a negative value when the statistical value is smaller than the set baseline KPI value, and has a positive value when the statistical value is greater than the set baseline KPI value (optimized object). A maximum value of the reward function $R$ needs to be obtained after each state acquisition.

In the above method, the $A_i$ corresponding to each $S_i$ may be obtained by an offline learning method.

At step 103, determining, according to the gain corresponding to each value of the N network parameters, an optimal value of the N network parameters as the value corresponding to the maximum gain.

In the present disclosure, step 102 may be performed prior to step 101. That is, the baseline basic KPI in step 102 may be a baseline basic KPI before the update, or may be a baseline basic KPI after the update.

In the present disclosure, whether to activate the wireless network parameter artificial intelligence (AI) function (that is, the adaptive configuration function of the wireless network parameter) may be determined by a wireless network parameter AI switch. One wireless network parameter AI switch may correspond to one or more cells.

That is, when determining to enable the wireless network parameter AI function according to the wireless network parameter AI switch, the method further includes: performing the step of determining the $i^{th}$ value of N network parameters of the network, i.e., performing step 100.

When it is determined to disable the wireless network parameter AI function according to the wireless network parameter AI switch, the procedure is ended.

In the present disclosure, the above method may be performed continuously and cyclically at regular or fixed periods (e.g., 15 minutes).

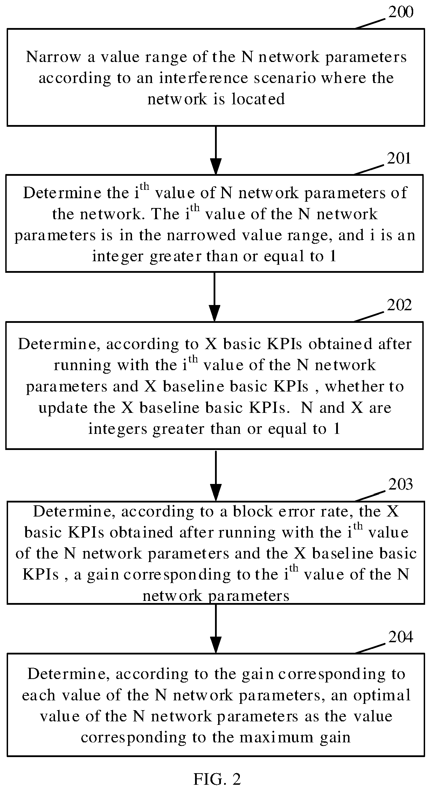

Referring to FIG. 2, the present disclosure provides another adaptive configuration method for a network, which includes the following steps 200 to 204.

At step 200, narrowing a value range of the N network parameters according to an interference scenario where the network is located.

In the present disclosure, the value range of the N network parameters may be narrowed by an offline learning method.

At step 201, determining the $i^{th}$ value of N network parameters of the network. The $i^{th}$ value of the N network parameters is in the narrowed value range, and i is an integer greater than or equal to 1.

At step 202, determining, according to X basic KPIs obtained after running with the $i^{th}$ value of the N network parameters and X baseline basic KPIs, whether to update the X baseline basic KPIs. N and X are integers greater than or equal to 1.

At step 203, determining, according to a block error rate, the X basic KPIs obtained after running with the $i^{th}$ value of the N network parameters and the X baseline basic KPIs, a gain corresponding to the $i^{th}$ value of the N network parameters.

At step 204, determining, according to the gain corresponding to each value of the N network parameters, an optimal value of the N network parameters as the value corresponding to the maximum gain.

Step 202 is the same as the specific implementation process of step 101 in the foregoing embodiment, step 203 is the same as the specific implementation process of step 102 in the foregoing embodiment, and step 204 is the same as the specific implementation process of step 103 in the foregoing embodiment, which steps are not repeated here.

In the present disclosure, step 203 may be performed prior to step 202. That is, the baseline basic KPI in step 203 may be a baseline basic KPI before the update, or may be a baseline basic KPI after the update.

In the present disclosure, whether to activate the wireless network parameter artificial intelligence (AI) function (that is, the adaptive configuration function of the wireless network parameter) may be determined by a wireless network parameter AI switch. One wireless network parameter AI switch may correspond to one or more cells.

That is, when determining to enable the wireless network parameter AI function according to the wireless network parameter AI switch, the method further includes: performing the step of narrowing the value range of the N network parameters according to the interference scenario where the network is located, i.e., performing step 200.

When it is determined to disable the wireless network parameter AI function according to the wireless network parameter AI switch, the procedure is ended.

In the present disclosure, the above method may be performed continuously and cyclically at regular or fixed periods (e.g., 15 minutes).

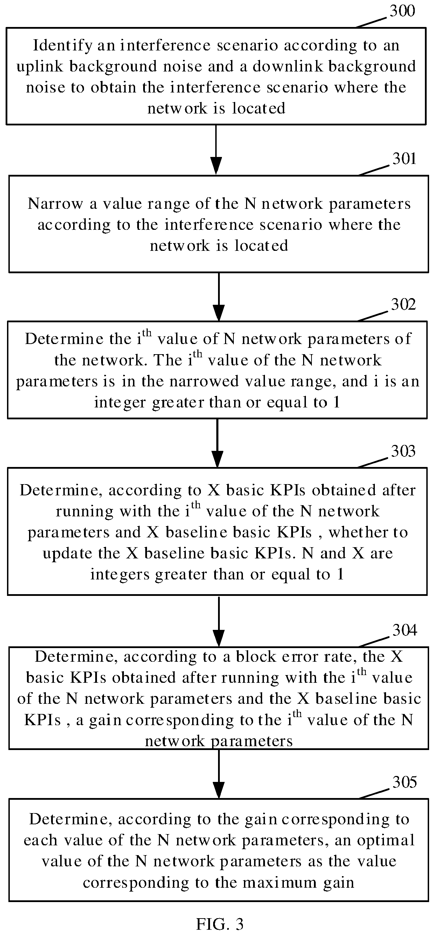

Referring to FIG. 3, the present disclosure provides another adaptive configuration method for a network, which includes the following steps 300 to 305.

At step 300, identifying an interference scenario according to an uplink background noise and a downlink background noise to obtain the interference scenario where the network is located.

In the present disclosure, measured values of the uplink and downlink background noises of each subcarrier may be indicated by counters, and these counters are used in combination with some determination conditions to identify the corresponding interference scenario.

In the present disclosure, through an interference scenario identification algorithm, the uplink and downlink interference may be identified with the statistical variables of each layer. Specifically, the interference scenario where the network is located may be obtained by an interference scenario identification method including: determining a condition satisfied by the uplink background noise and the downlink background noise; and determining the interference scenario where the network is located as the interference scenario corresponding to the satisfied condition.

For example, ul_noise represents the uplink background noise; dl_noise represents the downlink background noise in units of dBm. ul_baseline_noise represents the uplink baseline background noise; and dl_baseline_noise represents the downlink baseline background noise in units of dBm. T represents a scenario identification update cycle in the precision of 1 hour, and taking a value in the range of 1 hour to 100 days. An uplink measurement error threshold is UlMeasErrorThr, taking a default value of 2dB and ranging from 0 to 5 dB; and a downlink estimation error threshold is DlMeasErrorThr, taking a default value of 2dB and ranging from 0 to 10 dB.

Then, the uplink baseline background noise ul_baseline_noise=lin2db ((db2lin (thermal noise power spectrum density + BS noise coefficient))*system bandwidth), where lin2db() is a unit conversion function, db2lin() is a unit conversion function; and the downlink baseline background noise dl_baseline_noise=lin2db ((db2lin (thermal noise power spectrum density+ UE noise coefficient))*system bandwidth).

In the scenario identification update cycle T, statistics ul_noise and dl_noise, and the uplink background noise rise delta_ul_noise=ul_noise - ul_baseline_noise and the downlink background noise rise delta_dl_noise=dl_noise - dl_baseline_noise are recorded. When the uplink background noise rise delta_ul_noise is greater than or equal to the uplink measurement error threshold UlMeasErrorThr, and the downlink background noise rise delta_dl_noise is greater than or equal to the downlink estimation error threshold DlMeasErrorThr, and the uplink background noise rise delta_ul_noise is greater than or equal to a first preset threshold (e.g., 10), the interference scenario where the network is located is determined to be Scenario 4. When the uplink background noise rise delta_ul_noise is smaller than the uplink measurement error threshold UlMeasErrorThr, or the downlink background noise rise delta_dl_noise is smaller than the downlink estimation error threshold DlMeasErrorThr, or the uplink background noise rise delta_ul_noise is smaller than the first preset threshold (e.g., 10), the interference scenario where the network is located is determined to be Scenario 1. When the uplink background noise rise delta_ul_noise is greater than or equal to a second preset threshold (e.g., 30), the interference scenario where the network is located is determined to be Scenario 6. When the uplink background noise rise delta_ul_noise is greater than or equal to a third preset threshold (e.g., 20) and smaller than the second preset threshold, the interference scenario where the network is located is determined to be Scenario 5. When the uplink background noise rise delta_ul_noise is greater than or equal to a fourth preset threshold (e.g., 10) and smaller than the third preset threshold, the interference scenario where the network is located is determined to be Scenario 3. When the downlink background noise rise delta_dl_noise is greater than or equal to the downlink estimation error threshold DlMeasErrorThr, the interference scenario where the network is located is determined to be Scenario 2. When the downlink background noise rise delta_dl_noise is smaller than the downlink estimation error threshold DlMeasErrorThr, the interference scenario where the network is located is determined to be Scenario 0.

Apparently, in the present disclosure, the interference scenario where the network is located may also be obtained or set in advance through identification or obtained in other manners.

At step 301, narrowing a value range of the N network parameters according to an interference scenario where the network is located.

In the present disclosure, the value range of the N network parameters may be narrowed by an offline learning method.

At step 302, determining the $i^{th}$ value of N network parameters of the network. The $i^{th}$ value of the N network parameters is in the narrowed value range, and i is an integer greater than or equal to 1.

At step 303, determining, according to X basic KPIs obtained after running with the $i^{th}$ value of the N network parameters and X baseline basic KPIs, whether to update the X baseline basic KPIs. N and X are integers greater than or equal to 1.

At step 304, determining, according to a block error rate, the X basic KPIs obtained after running with the $i^{th}$ value of the N network parameters and the X baseline basic KPIs, a gain corresponding to the $i^{th}$ value of the N network parameters.

At step 305, determining, according to the gain corresponding to each value of the N network parameters, an optimal value of the N network parameters as the value corresponding to the maximum gain.

Step 301 is the same as the specific implementation process of step 200 in the foregoing embodiment, step 302 is the same as the specific implementation process of step 201 in the foregoing embodiment, step 303 is the same as the specific implementation process of step 202 in the foregoing embodiment, step 304 is the same as the specific implementation process of step 203 in the foregoing embodiment, and step 305 is the same as the specific implementation process of step 204 in the foregoing embodiment, which are not repeated here.

In the present disclosure, step 304 may be performed prior to step 303. That is, the baseline basic KPI in step 304 may be a baseline basic KPI before the update, or may be a baseline basic KPI after the update.

In the present disclosure, whether to activate the wireless network parameter artificial intelligence (AI) function (that is, the adaptive configuration function of the wireless network parameter) may be determined by a wireless network parameter AI switch. One wireless network parameter AI switch may correspond to one or more cells.

That is, when determining to enable the wireless network parameter AI function according to the wireless network parameter AI switch, the method further includes: performing the step of identifying the interference scenario according to the uplink background noise and the downlink background noise to obtain the interference scenario where the network is located, i.e., performing step 300.

When it is determined to disable the wireless network parameter AI function according to the wireless network parameter AI switch, the procedure is ended.

In the present disclosure, the above method may be performed continuously and cyclically at regular or fixed periods (e.g., 15 minutes).

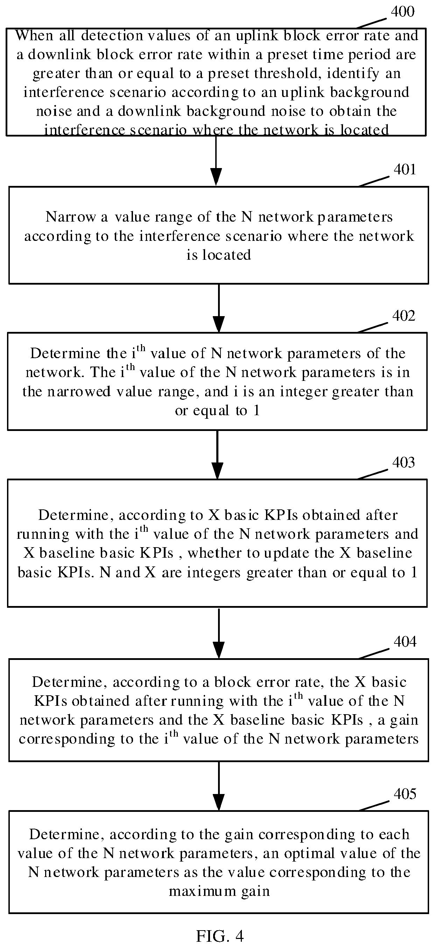

Referring to FIG. 4, the present disclosure provides another adaptive configuration method for a network, which includes the following steps 400 to 405.

At step 400, when all detection values of an uplink block error rate and a downlink block error rate within a preset time period are greater than or equal to a preset threshold, identifying an interference scenario according to an uplink background noise and a downlink background noise to obtain the interference scenario where the network is located.

When the uplink block error rate and the downlink block error rate remain greater than or equal to a preset threshold (such as 1%) within a preset time period, it means that the interference scenario is a steady-state scenario, and then the interference scenario identification may be started. When the uplink block error rate or the downlink block error rate remains at 0 within the preset time period, it is considered that no steady-state interference scenario is present, and the scenario identification is meaningless in this case.

At step 401, narrowing a value range of the N network parameters according to an interference scenario where the network is located.

In the present disclosure, the value range of the N network parameters may be narrowed by an offline learning method.

At step 402, determining the $i^{th}$ value of N network parameters of the network. The $i^{th}$ value of the N network parameters is in the narrowed value range, and i is an integer greater than or equal to 1.

At step 403, determining, according to X basic KPIs obtained after running with the $i^{th}$ value of the N network parameters and X baseline basic KPIs, whether to update the X baseline basic KPIs. N and X are integers greater than or equal to 1.

At step 404, determining, according to a block error rate, the X basic KPIs obtained after running with the $i^{th}$ value of the N network parameters and the X baseline basic KPIs, a gain corresponding to the $i^{th}$ value of the N network parameters.

At step 405, determining, according to the gain corresponding to each value of the N network parameters, an optimal value of the N network parameters as the value corresponding to the maximum gain.

Steps 401 to 405 are the same as the specific implementation process of steps 301 to 305 in the foregoing embodiment, which are not repeated here.

In the present disclosure, when M detection values of the uplink block error rate and the downlink block error rate are smaller than a preset threshold within a preset time period, steps 100 to 103 are performed.

In the present disclosure, step 404 may be performed prior to step 403. That is, the baseline basic KPI in step 404 may be a baseline basic KPI before the update, or may be a baseline basic KPI after the update.

In the present disclosure, whether to activate the wireless network parameter artificial intelligence (AI) function (that is, the adaptive configuration function of the wireless network parameter) may be determined by a wireless network parameter AI switch. One wireless network parameter AI switch may correspond to one or more cells.

That is, when determining to enable the wireless network parameter AI function according to the wireless network parameter AI switch, the method further includes: performing the step of judging whether the uplink block error rate and the downlink block error rate remain greater than or equal to the preset threshold within the preset time period, i.e., performing step 400.

When it is determined to disable the wireless network parameter AI function according to the wireless network parameter AI switch, the procedure is ended.

In the present disclosure, the above method may be performed continuously and cyclically at regular or fixed periods (e.g., 15 minutes).

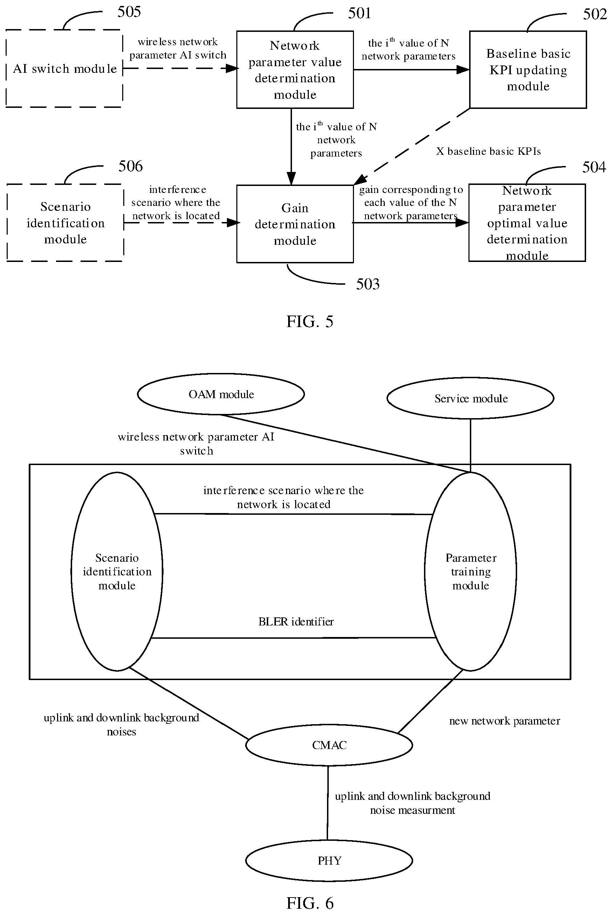

Referring to FIG. 5, the present disclosure provides an adaptive configuration apparatus for a network, including: a network parameter value determination module 501 configured to determine the $i^{th}$ value of N network parameters of the network, where i is an integer greater than or equal to 1; a baseline basic KPI updating module 502 configured to determine, according to X basic KPIs obtained after running with the $i^{th}$ value of the N network parameters and X baseline basic KPIs, whether to update the X baseline basic KPIs, where N and X are integers greater than or equal to 1; a gain determination module 503 configured to determine, according to a block error rate, the X basic KPIs obtained after running with the $i^{th}$ value of the N network parameters and the X baseline basic KPIs, a gain corresponding to the $i^{th}$ value of the N network parameters; and a network parameter optimal value determination module 504 configured to determine, according to the gain corresponding to each value of the N network parameters, an optimal value of the N network parameters as the value corresponding to the maximum gain.

In the present disclosure, the adaptive configuration apparatus for a network may further include: an AI switch module 505 configured to send a wireless network parameter AI switch to the network parameter value determination module 501. The network parameter value determination module 501 is further configured to: perform determining the $i^{th}$ value of N network parameters of the network when determining to enable a wireless network parameter artificial intelligence (AI) function according to the wireless network parameter AI switch.

In the present disclosure, the network parameter value determination module 501 is further configured to: perform determining the $i^{th}$ value of N network parameters of the network when M detection values of an uplink block error rate and a downlink block error rate are smaller than a preset threshold within preset time period.

In the present disclosure, the network parameter value determination module 501 is further configured to:

narrow a value range of the N network parameters according to an interference scenario where the network is located. The $i^{th}$ value of the N network parameters is in the narrowed value range.

In the present disclosure, the network may refer to a network covered by one or more cells.

In the present disclosure, the network may be any network, such as an NB-IoT network.

In the present disclosure, the N network parameters are network parameters having strong correlation with the composite KPI or basic KPI.

The N network parameters with strong correlation with the composite KPI or basic KPI may be obtained through simulation. For example, when the composite KPI is calculated from two basic KPIs (such as an uplink effective throughput rate of an NB-IoT cell signaling radio bearer (SRB) and a downlink effective throughput rate of an NB-IoT cell SRB), the obtained N network parameters having strong correlation with the composite KPI or basic KPI through simulation include: the maximum repeated number of UE-specific search space (USS), a start subframe of USS, the repeated number of Message 4 (MSG4) hybrid automatic repeat request (HARQ), and so on.

In the present disclosure, the $1^{st}$ value of the N network parameters may be a value of a default configuration, the $i^{th}$ value of the N network parameters may be obtained by an offline learning method, and the $i^{th}$ value of the N network parameters is in an initial value range of the N network parameters.

In the present disclosure, a network parameter training module may perform network parameter training on the N network parameters of the network according to the interference scenario where the network is located to obtain new values of the N network parameters; or the network parameter training module may directly perform network parameter training on the N network parameters of the network to obtain new values of the N network parameters; or when M detection values of the uplink block error rate and the downlink block error rate are smaller than a preset threshold within a preset time period, the network parameter training module may perform network parameter training on the N network parameters of the network to obtain new values of the N network parameters. M is an integer greater than or equal to 1.

In the present disclosure, when the adaptive configuration of the network parameters is performed for the first time, the X baseline basic KPIs are obtained after running with the value of the default configuration of the N network parameters, and the subsequent X baseline basic KPIs are obtained by updating with the X basic KPIs obtained after running with actual values of the N network parameters.

In the present disclosure, the baseline basic KPI updating module 502 is configured to perform at least one of: updating the X baseline basic KPIs to the X basic KPIs obtained after running with the $i^{th}$ value of the N network parameters, when a difference between a composite KPI corresponding to the X basic KPIs obtained after running with the $i^{th}$ value of the N network parameters and a baseline composite KPI corresponding to the X baseline basic KPIs is greater than or equal to a preset threshold value; or keeping the X baseline basic KPIs unchanged when the difference between the composite KPI corresponding to the X basic KPIs obtained after running with the $i^{th}$ value of the N network parameters and the baseline composite KPI corresponding to the X baseline basic KPIs is smaller than the preset threshold value.

In the present disclosure, the composite KPI is calculated from the X basic KPIs and weights corresponding to the basic KPIs. X is an integer greater than or equal to 1. That is, the composite KPI is a weighted average of the X basic KPIs.

The basic KPI may be any one or more KPIs, including, for example, a cell radio resource control (RRC) setup success rate, a cell S1 interface UE related logic signaling connection setup success rate, a cell wireless drop rate, a cell media access control (MAC) layer uplink block error rate, a cell MAC layer downlink block error rate, a cell eNodeB paging congestion rate, and the like.

Different operators may employ different basic KPIs.

In the present disclosure, the gain determination module 503 is configured to: determine, according to a block error rate, the X basic KPIs obtained after running with the $i^{th}$ value of the N network parameters and the X baseline basic KPIs, a reward function corresponding to the $i^{th}$ value of the N network parameters; and determine, according to the reward function corresponding to the $i^{th}$ value of the N network parameters, a gain corresponding to the $i^{th}$ value of the N network parameters.

In the present disclosure, the gain determination module 503 is configured to determine, according to the block error rate, the X basic KPIs obtained after running with the $i^{th}$ value of the N network parameters and the X baseline basic KPIs, the reward function corresponding to the $i^{th}$ value of the N network parameters by at least one of: calculating, when the block error rate (BLER) is in a preset range, the reward function corresponding to the $i^{th}$ value of the N network

$$R_i = \sum_j w_j \times norm\left(KPI_{j,real} - KPI_{j,target}\right)$$

parameters according to a formula, where $R_i$ is the reward function corresponding to the $i^{th}$ value of the N network parameters, $w_j$ is the weight of the $j^{th}$ basic KPI, $KPI_{j,real}$ is the $j^{th}$ basic KPI obtained after running with the $i^{th}$ value of the N network parameters, $KPI_{j,target}$ is the $j^{th}$ baseline basic KPI, and norm (X) is the normalization of X; or determining, when the block error rate is not in the preset range, the reward function corresponding to the i$^{th}$ value of the N network parameters as a preset value (e.g., -100), where the preset value is smaller than 0.

In the present disclosure, the gain determination module 503 is configured to determine, according to the reward function corresponding to the i$^{th}$ value of the N network parameters, the gain corresponding to the i$^{th}$ value of the N network parameters by a method including: calculating the gain corresponding to the i$^{th}$ value of the N network parameters according to a formula $Q(S_i,A_i) = Q(S_{i-1},A_{i-1}) + \alpha\lfloor R_{i-1} + \gamma R_i - Q(S_{i-1},A_{i-1})\rfloor$, where $Q(S_i,A_i)$ is a gain corresponding to the i$^{th}$ value of the N network parameters, $S_i$ is the i$^{th}$ value of the N network parameters, $A_i$ is an action corresponding to the i$^{th}$ value of the N network parameters, $Q(S_{i-1},A_{i-1})$ is a gain corresponding to the (i-1)$^{th}$ value of the N network parameters, $S_{i-1}$ is the (i-1)$^{th}$ value of the N network parameters, $A_{i-1}$ is an action corresponding to the (i-1)$^{th}$ value of the N network parameters, $R_{i-1}$ is a reward function corresponding to the (i-1)$^{th}$ value of the N network parameters, $R_i$ is a reward function corresponding to the i$^{th}$ value of the N network parameters, $\alpha$ is a learning rate, and $\gamma$ is a discount rate.

In the above method, the reward function $R_i$ needs to first judge whether the current state meets the expected block error rate (i.e., whether it is within a preset range) according to the BLER value. When the BLER is within a normal operating range (i.e., within the preset range), the reward function $R_i$ is a difference between a current KPI statistical value and a baseline value, which has a negative value when the statistical value is smaller than the set baseline KPI value, and has a positive value when the statistical value is greater than the set baseline KPI value (optimized object). A maximum value of the reward function $R$ needs to be obtained after each state acquisition.

In the above method, the $A_i$ corresponding to each $S_i$ may be obtained by an offline learning method.

In the present disclosure, the apparatus may further include: a scenario identification module 506 configured to identify an interference scenario according to an uplink background noise and a downlink background noise to obtain the interference scenario where the network is located.

In the present disclosure, measured values of the uplink and downlink background noises of each subcarrier may be indicated by counters, and these counters are used in combination with some determination conditions to identify the corresponding interference scenario.

In the present disclosure, the scenario identification module 506 may identify the uplink and downlink interference with the statistical variables of each layer through an interference scenario identification algorithm. Specifically, the scenario identification module 506 may obtain the interference scenario where the network is located by an interference scenario identification method including: determining a condition satisfied by the uplink background noise and the downlink background noise; and determining the interference scenario where the network is located as the interference scenario corresponding to the satisfied condition.

For example, ul_noise represents the uplink background noise; dl_noise represents the downlink background noise in units of dBm. ul_baseline_noise represents the uplink baseline background noise; and dl_baseline_noise represents the downlink baseline background noise in units of dBm. T represents a scenario identification update cycle in the precision of 1 hour, and taking a value in the range {1 hour to 100 days}. An uplink measurement error threshold is UIMeasErrorThr, taking a default value of 2dB and ranging in {0 to 5 dB}; and a downlink estimation error threshold is DIMeasErrorThr, taking a default value of 2dB and ranging in {0 to 10 dB}.

Then, the uplink baseline background noise ul_baseline_noise=lin2db ((db2lin (thermal noise power spectrum density + BS noise coefficient))*system bandwidth), where lin2db() is a unit conversion function, db21in() is a unit conversion function; and the downlink baseline background noise dl_baseline_noise=lin2db ((db2lin (thermal noise power spectrum density+ UE noise coefficient))*system bandwidth).

In the scenario identification update cycle T, statistics ul_noise and dl_noise, and the uplink background noise rise delta_ul_noise=ul_noise - ul_baseline_noise and the downlink background noise rise delta_dl_noise=dl_noise - dl_baseline_noise are recorded. When the uplink background noise rise delta_ul_noise is greater than or equal to the uplink measurement error threshold UIMeasErrorThr, and the downlink background noise rise delta_dl_noise is greater than or equal to the downlink estimation error threshold DIMeasErrorThr, and the uplink background noise rise delta_ul_noise is greater than or equal to a first preset threshold (e.g., 10), the interference scenario where the network is located is determined to be Scenario 4. When the uplink background noise rise delta_ul_noise is smaller than the uplink measurement error threshold UIMeasErrorThr, or the downlink background noise rise delta_dl_noise is smaller than the downlink estimation error threshold DIMeasErrorThr, or the uplink background noise rise delta_ul_noise is smaller than the first preset threshold (e.g., 10), the interference scenario where the network is located is determined to be Scenario 1. When the uplink background noise rise delta_ul_noise is greater than or equal to a second preset threshold (e.g., 30), the interference scenario where the network is located is determined to be Scenario 6. When the uplink background noise rise delta_ul_noise is greater than or equal to a third preset threshold (e.g., 20) and smaller than the second preset threshold, the interference scenario where the network is located is determined to be Scenario 5. When the uplink background noise rise delta_ul_noise is greater than or equal to a fourth preset threshold (e.g., 10) and smaller than the third preset threshold, the interference scenario where the network is located is determined to be Scenario 3. When the downlink background noise rise delta_dl_noise is greater than or equal to the downlink estimation error threshold DIMeasErrorThr, the interference scenario where the network is located is determined to be Scenario 2. When the downlink background noise rise delta_dl_noise is smaller than the downlink estimation error threshold DIMeasErrorThr, the interference scenario where the network is located is determined to be Scenario 0.

Apparently, in the present disclosure, the interference scenario where the network is located may also be obtained or set in advance through identification or obtained in other manners.

In the present disclosure, the scenario identification module 506 is further configured to: perform identifying the interference scenario according to the uplink background noise and the downlink background noise to obtain the interference scenario where the network is located when all detection values of an uplink block error rate and a downlink block error rate within preset time period are greater than or equal to a preset threshold.

When the uplink block error rate and the downlink block error rate remain greater than or equal to a preset threshold (such as 1%) within a preset time period, it means that the interference scenario is a steady-state scenario, and then the interference scenario identification may be started. When the uplink block error rate or the downlink block error rate remains at 0 within the preset time period, it is considered that no steady-state interference scenario is present, and the scenario identification is meaningless in this case.

In the present disclosure, whether to activate the wireless network parameter artificial intelligence (AI) function (that is, the adaptive configuration function of the wireless network parameter) may be determined by a wireless network parameter AI switch. One wireless network parameter AI switch may correspond to one or more cells.

That is, the scenario identification module 506 is further configured to: perform identifying the interference scenario according to the uplink background noise and the downlink background noise to obtain the interference scenario where the network is located when determining to enable the wireless network parameter AI function according to the wireless network parameter AI switch.

When it is determined to disable the wireless network parameter AI function according to the wireless network parameter AI switch, the procedure is ended.

In the present disclosure, the above method may be performed continuously and cyclically at regular or fixed periods (e.g., 15 minutes).

The specific implementation process of the adaptive configuration apparatus for a network is the same as that of the adaptive configuration method for a network described in the foregoing embodiments, which is not repeated here.

The present disclosure provides another adaptive configuration apparatus for a network, including a processor, and a computer readable storage medium having instructions stored thereon which, when executed by the processor, cause any of the adaptive configuration methods for a network described above to be implemented.

The present disclosure provides a computer readable storage medium having a computer program stored thereon which, when executed by a processor, causes steps of any of the adaptive configuration methods for a network described above to be implemented.

The embodiments of the disclosure realize the adaptive configuration of the network parameters based on X basic KPIs without continuously manual adjustments of the network parameters, thereby greatly saving the manpower.

The following is a description of specific implementations of the method of the present disclosure by way of example. The examples are proposed merely for the purpose of facilitating understanding, and are not intended to limit the scope of the embodiments of the present disclosure.

An architectural composition of a base station is described according to the present disclosure. As shown in FIG. 6, the base station includes an Operation Administration and Maintenance (OAM) module, a service module, a Control Surface of Media Access Control (CMAC), a Physical Layer (PHY), and a scenario identification module and a parameter training module newly arranged on a main control board (the parameter training module here includes the network parameter value determination module 501, the baseline basic KPI updating module 502, the gain determination module 503, and the network parameter optimal value determination module 504 as described above).

The OAM module (i.e., the AI switch module described above) is configured to configure a wireless network parameter AI switch, and send the wireless network parameter AI switch to the parameter training module. The service module is configured to send a service counter to the parameter training module, and the service counter is configured to count an uplink block error rate (BLER) and a downlink block error rate. The scenario identification module is configured to identify an interference scenario according to an uplink background noise and a downlink background noise to obtain the interference scenario where the network is located, and record the interference scenario where the network is located in a log. The parameter training module is configured to: inform, when determining to enable the wireless network parameter AI function according to the wireless network parameter AI switch and when determining to perform scenario identification according to the service counter, the scenario identification module to perform scenario identification; narrow a value range of the N network parameters according to an interference scenario where the network is located, where N is an integer greater than or equal to 1; determine the $i^{th}$ value of N network parameters of the network, where the $i^{th}$ value of the N network parameters is in the narrowed value range, and i is an integer greater than or equal to 1; send the $i^{th}$ value of the N network parameters to a CMAC, and record the $i^{th}$ value of the N network parameters into a log; determine whether to update X baseline basic KPIs according to the X basic KPIs obtained after the operation according to the $i^{th}$ value of N network parameters and the X baseline basic KPIs, where N and X are integers greater than or equal to 1; determine, according to a block error rate, the X basic KPIs obtained after running with the $i^{th}$ value of the N network parameters and the X baseline basic KPIs, a gain corresponding to the $i^{th}$ value of the N network parameters; and determine, according to the gain corresponding to each value of the N network parameters, an optimal value of the N network parameters as the value corresponding to the maximum gain. The CMAC is configured to: send measured uplink background noise and downlink background noise to the scenario identification module; and receive the $i^{th}$ value of the N network parameters and configure the $i^{th}$ values of the N network parameters into the network. The PHY is configured to measure the uplink and downlink background noises.

According to the present disclosure, the implementation process of the introduced base station includes two parts: an initial process and a parameter training process.

The initial process includes: a process of electrifying or restarting a base station, a process of deleting or rebuilding a cell, and a process of configuring a wireless network parameter AI switch.

During the process of configuring the wireless network parameter AI switch, the OAM module sends the wireless network parameter AI switch to the parameter training module, which determines whether to enable the wireless network parameter AI function of the cell according to the wireless network parameter switch.

Specifically, when a cell is deleted, the wireless network parameter AI switch is configured to be 0 (i.e., off); when a cell is newly added (i.e., rebuilt), the wireless network parameter AI switch is configured to be 1 (i.e., on); and in other scenarios, the wireless network parameter AI switch may be configured according to the actual situation.

When the wireless network parameter AI switch is configured to be off, the OAM module sends values of the N network parameters configured in the background to the parameter training module, which sends the values of the N network parameters to the CMAC, where the values of the N network parameters are configured into the network.

When the wireless network parameter AI switch is configured to be on, the OAM module sends the values of the N network parameters stored in a database (i.e., the configured default values of the N network parameters) to the parameter training module, which sends the values of the N network parameters to the CMAC, where the values of the N network parameters are configured into the network.

During the parameter training process, taking 15 minutes as a granularity (apparently, other time periods may be adopted as the granularity, and the specific time granularity is not intended to limit the protection scope of the embodiment of the present disclosure), the CMAC configures the values of the N network parameters into the network, and after the first 15 minutes running with the configured default values of the N network parameters, the parameter training module acquires all basic KPIs, calculates a composite KPI based on the acquired KPIs, and takes the composite KPI as a baseline composite KPI when the composite KPI is stable (for example, sampling fluctuations in a continuous week are within an allowable range).

After the $2i^{th}$ (i is an integer greater than or equal to 1) 15 minutes running with the configured default values of the N network parameters, the scenario identification module identifies an interference scenario according to an uplink background noise and a downlink background noise to obtain the interference scenario where the network is located. The parameter training module narrows a value range of the N network parameters according to the interference scenario where the network is located, determines new values of the N network parameters, sends the new values of the N network parameters to the CMAC, where the new values of the N network parameters are configured into the network to run with the new values of the N network parameters.

After the $(2i+1)^{th}$ 15 minutes running with the configured default values of the N network parameters, the parameter training module determines, according to X basic KPIs obtained after running with the new values of the N network parameters and X baseline basic KPIs, whether to update the X baseline basic KPIs. Specifically, when a difference between the composite KPI after running with the new values of the N network parameters and the baseline composite KPI is greater than or equal to a preset threshold, the X baseline basic KPIs are updated to the X basic KPIs after running with the new values of the N network parameters. That is, after the values of the N network parameters are modified, the composite KPI is obviously improved. When the difference between the composite KPI after running with the new values of the N network parameters and the baseline composite KPI is smaller than the preset threshold, the X baseline basic KPIs remain unchanged. That is, after the N network parameters are modified, the composite KPI is not obviously improved or the improvement can be neglected, and the modification to the network parameters is invalid.

According to the block error rate, the X basic KPIs obtained after running with the new values of the N network parameters and the X baseline basic KPIs, gains corresponding to the new values of the N network parameters are determined.

After gains corresponding to all the values of the N network parameters are obtained, the optimal value of the N network parameters is determined as the value corresponding to the maximum gain.

For example, when the basic KPIs used herein are an uplink effective throughput rate of an NB-IoT cell SRB and a downlink effective throughput rate of an NB-IoT cell SRB, the two basic KPIs each account for 50%, and after operation, changes of the resulting composite KPI are as shown in table 1.

table1

| KPI name | Cell summary (all-day indicator) | English abbreviation | Weight | KPI baseline | New KPI | Variation | Improvement amplitude of single KPI | Individual contribution to the total (%) |
|---|---|---|---|---|---|---|---|---|
| Average throughput rate of cell uplink RLC layer | 20 | R3 | 50 | 20 | 30 | 10 | 50% | 25% |
| Average throughput rate of cell downlink RLC layer | 10 | R4 | 50 | 10 | 10 | 0 | 0% | 0% |
| Composite KPI | | | | 100% | | | | 25% |

EP 3 961 986 A1

The two KPI indicators obtained through simulation are key indicators influencing performance of the whole wireless network, and the adjustment and optimization direction of the parameters contributing to the uplink and downlink throughput rate is usually the most correct direction. For example, simulation tests are conducted to find out which wireless network parameters of those shown in table 1 have stronger correlation with the two KPI indicators, i.e., which wireless network parameters may be adjusted to significantly influence the two KPI indicators.

Each time the values of the N network parameters are modified, if the composite KPI aligned in the next 15 minutes does not have any improvement over the baseline integrated KPI, the modification to values of the network parameters is discarded. The used value combination of the N network parameters is marked, and then the next attempt is made. If any improvement is achieved, the current new values of the N network parameters, the corresponding improved composite KPI and the improvement amplitude of the indicator are recorded.

In particular, the system will set a threshold for changes of the indicator and improvement or not, caused by modifying the value of the network parameters. For example, under the current configuration condition of the baseline network parameters, for a composite KPI obtained within a certain time period after running, an improvement amplitude exceeding 1% caused by adaptive attempts of parameter changes will be counted as effective improvement. Changes less than that will be neglected by the system and not counted as variations.

Through such continuous traversal of the parameters, the network parameters corresponding to the optimal composite KPI within a week are selected for use in configuration.

Then, if the system continuously runs for one month, the network parameters corresponding to the optimal composite KPI of the 4 weeks of the month are selected for use in configuration.

If the system continues to run for a second month, a further comparison with the previous month is made, and more optimal values of the N network parameters are iteratively selected as the configuration parameter combination actually used. In the case where the system continues to run but for less than two month, comparisons are still made between weeks.

In this way, as long as the one-key automatic configuration switch is turned on, the system will run in such a continuously iterative mode so that the current optimal network parameter configuration can always be obtained, and once the service terminal model on which the current network is operated changes, the system can adapt to the changes to obtain the optimal network parameter configuration under the new terminal deployment characteristics without manual optimization and intervention.

According to the present disclosure, the selection of the basic KPIs is introduced, and the selection of the basic KPIs is not constant, and different service terminals of different operators vary in the type and the distribution so that different requirements on network performance are brought. The solution can be performed for the basic KPIs customized by different operators. For example, a group of basic KPIs shown in table 2 can be selected for China Mobile Communication Corporation (CMCC). The first two KPIs are forward indicators with weights of 30% respectively, and the last 4 KPIs are reverse indicators with weights of 10% respectively.

Table 2

| Indicator class | Indicator subclass | Indicator name |
|---|---|---|
| Accessibility | RRC connection | Success rate of establishing cell RRC connection |
| Accessibility | S1 connection | Success rate of establishing cell S1 interface UE related logic signaling connection |
| Accessibility | UE context | Cell wireless drop rate |
| Reliability | Packet loss rate | Cell MAC layer uplink BLER |
| Reliability | Packet loss rate | Cell MAC layer downlink BLER |
| Accessibility | Paging statistics | Cell eNodeB paging congestion rate |

In this way, the baseline KPI can be obtained by selecting basic KPI indicators customized by different operators, and the adjustment and optimization effects are ensured to have positive gains for different operator networks. The above baseline KPIs are converted as a whole to obtain a composite KPI, which can be used as a unique standard for forward and backward movement of self-optimization of the parameters. In order to ensure the implementation effect, after the baseline KPIs are changed to the basic KPIs customized by the operator, another group of N network parameters strongly related to the basic KPIs still needs to be measured and calculated by a simulation platform, the system training and the AMC network parameter iteration are performed, and attempts with values in the strongly related parameter set selected by the simulation are made to avoid invalid parameter adaptation.

Those of ordinary skill in the art will appreciate that all or some steps of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components. For example, one physical component may have multiple functions, or one function or step may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer readable medium which may include a computer storage medium (or non-transitory medium). As is well known to those of ordinary skill in the art, the term computer storage medium includes volatile and nonvolatile, removable and non-removable medium implemented in any method or technology for storing information, such as computer readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer.

Despite the implementations disclosed in the embodiments of the present disclosure as described above, they are merely implementations used to facilitate the understanding of the embodiments of the present disclosure, and are not intended to limit the embodiments of the present disclosure. Any modification and variation in the form and details of the embodiments of the disclosure can be made by any person skilled in the art of the present disclosure without departing from the spirit and scope disclosed by the embodiments of the disclosure. However, the scope of protection of the embodiments of the disclosure is defined by the scope of the appended claims.

**Claims**

1.  An adaptive configuration method for a network, comprising:

    determining the $i^{th}$ value of N network parameters of the network, wherein i is an integer greater than or equal to 1;
    determining, according to X basic key performance indicators, called KPIs, obtained after running with the $i^{th}$ value of the N network parameters and X baseline basic KPIs, whether to update the X baseline basic KPIs, wherein N and X are integers greater than or equal to 1;
    determining, according to a block error rate, the X basic KPIs obtained after running with the $i^{th}$ value of the N network parameters and the X baseline basic KPIs, a gain corresponding to the $i^{th}$ value of the N network parameters; and
    determining, according to the gain corresponding to each value of the N network parameters, an optimal value of the N network parameters as the value corresponding to the maximum gain.

2.  The method according to claim 1, wherein when determining to enable a wireless network parameter artificial intelligence, called AI, function according to a wireless network parameter AI switch, the method further comprises:
    performing the step of determining the $i^{th}$ value of N network parameters of the network.

3.  The method according to claim 1 or 2, further comprising:
    performing the step of determining the $i^{th}$ value of N network parameters of the network when M detection values of an uplink block error rate and a downlink block error rate are smaller than a preset threshold within preset time period.

4.  The method according to claim 1 or 2, wherein before determining the $i^{th}$ value of N network parameters of the network, the method further comprises:

    narrowing a value range of the N network parameters according to an interference scenario where the network is located,
    wherein the $i^{th}$ value of the N network parameters is in the narrowed value range.

5.  The method according to claim 4, wherein before narrowing the value range of the N network parameters according to the interference scenario where the network is located, the method further comprises:
    identifying the interference scenario according to an uplink background noise and a downlink background noise to obtain the interference scenario where the network is located.

6.  The method according to claim 5, wherein identifying the interference scenario according to the uplink background noise and the downlink background noise to obtain the interference scenario where the network is located comprises:

determining a condition satisfied by the uplink background noise and the downlink background noise; and determining the interference scenario where the network is located as the interference scenario corresponding to the satisfied condition.

7. The method according to claim 5, further comprising:
when all detection values of an uplink block error rate and a downlink block error rate within preset time period are greater than or equal to a preset threshold, performing the step of identifying the interference scenario according to the uplink background noise and the downlink background noise to obtain the interference scenario where the network is located.

8. The method according to claim 1 or 2, wherein determining, according to X basic KPIs obtained after running with the $i^{th}$ value of the N network parameters and X baseline basic KPIs, whether to update the X baseline basic KPIs comprises at least one of:

updating the X baseline basic KPIs to the X basic KPIs obtained after running with the $i^{th}$ value of the N network parameters, when a difference between a composite KPI corresponding to the X basic KPIs obtained after running with the $i^{th}$ value of the N network parameters and a baseline composite KPI corresponding to the X baseline basic KPIs is greater than or equal to a preset threshold value; or keeping the X baseline basic KPIs unchanged when the difference between the composite KPI corresponding to the X basic KPIs obtained after running with the $i^{th}$ value of the N network parameters and the baseline composite KPI corresponding to the X baseline basic KPIs is smaller than the preset threshold value.

9. The method according to claim 8, wherein the composite KPI is calculated from the X basic KPIs and weights corresponding to the basic KPIs.

10. The method according to claim 1 or 2, wherein determining, according to the block error rate, the X basic KPIs obtained after running with the $i^{th}$ value of the N network parameters and the X baseline basic KPIs, the gain corresponding to the $i^{th}$ value of the N network parameters comprises:

determining, according to the block error rate, the X basic KPIs obtained after running with the $i^{th}$ value of the N network parameters and the X baseline basic KPIs, a reward function corresponding to the $i^{th}$ value of the N network parameters; and determining, according to the reward function corresponding to the $i^{th}$ value of the N network parameters, a gain corresponding to the $i^{th}$ value of the N network parameters.

11. The method according to claim 10, wherein determining, according to the block error rate, the X basic KPIs obtained after running with the $i^{th}$ value of the N network parameters and the X baseline basic KPIs, the reward function corresponding to the $i^{th}$ value of the N network parameters comprises at least one of:

calculating, when the block error rate is in a preset range, the reward function corresponding to the $i^{th}$ value of

$$R_i = \sum_j w_j \times norm \left( KPI_{j,real} - KPI_{j,target} \right)$$

the N network parameters according to a formula , wherein $R_i$ is the reward function corresponding to the $i^{th}$ value of the N network parameters, $w_j$ is the weight of the $j^{th}$ basic KPI, $KPI_{j,real}$ is the $j^{th}$ basic KPI obtained after running with the $i^{th}$ value of the N network parameters, $KPI_{j,target}$ is the $j^{th}$ baseline basic KPI, and norm (X) is the normalization of X; or determining, when the block error rate is not in the preset range, the reward function corresponding to the $i^{th}$ value of the N network parameters as a preset value.

12. The method according to claim 10, wherein determining, according to the reward function corresponding to the $i^{th}$ value of the N network parameters, the gain corresponding to the $i^{th}$ value of the N network parameters comprises:

calculating the gain corresponding to the $i^{th}$ value of the N network parameters according to a formula $Q(S_i,A_i)=Q(S_{i-1},A_{i-1})+\alpha[R_{i-1}+\gamma R_i - Q(S_{i-1},A_{i-1})]$, wherein $Q(S_i,A_i)$ is a gain corresponding to the $i^{th}$ value of the N network parameters, $S_i$ is the $i^{th}$ value of the N network parameters, $A_i$ is an action corresponding to the $i^{th}$ value of the N network parameters, $Q(S_{i-1},A_{i-1})$ is a gain corresponding to the $(i-1)^{th}$ value of the N network parameters, $S_{i-1}$ is the $(i-1)^{th}$ value of the N network parameters, $A_{i-1}$, is an action corresponding to the $(i-1)^{th}$ value of the N network parameters, $R_{i-1}$ is a reward function corresponding to the $(i-1)^{th}$ value of the N network parameters, $R_i$ is a reward function corresponding to the $i^{th}$ value of the N network parameters, $\alpha$ is a learning rate, and $\gamma$ is a discount rate.

13. An adaptive configuration apparatus for a network, comprising:

a network parameter value determination module configured to determine the $i^{th}$ value of N network parameters of the network, wherein i is an integer greater than or equal to 1;

a baseline basic KPI updating module configured to determine, according to X basic key performance indicators, called KPIs, obtained after running with the $i^{th}$ value of the N network parameters and X baseline basic KPIs, whether to update the X baseline basic KPIs, where N and X are integers greater than or equal to 1;

a gain determination module configured to determine, according to a block error rate, the X basic KPIs obtained after running with the $i^{th}$ value of the N network parameters and the X baseline basic KPIs, a gain corresponding to the $i^{th}$ value of the N network parameters; and

a network parameter optimal value determination module configured to determine, according to the gain corresponding to each value of the N network parameters, an optimal value of the N network parameters as the value corresponding to the maximum gain.

14. An adaptive configuration apparatus for a network, comprising a processor, and a computer readable storage medium having instructions stored thereon, wherein the instructions, when executed by the processor, causes the processor to implement the adaptive configuration method for a network according to any one of claims 1 to 12.

15. A computer readable storage medium having a computer program stored thereon, wherein the computer program, when executed by a processor, causes the processor to implement the adaptive configuration method for a network according to any one of claims 1 to 12.

100

Determine the i<sup>th</sup> value of N network parameters of the network, where i is an integer greater than or equal to 1

101

Determine, according to X basic KPIs obtained after running with the i<sup>th</sup> value of the N network parameters and X baseline basic KPIs , whether to update the X baseline basic KPIs, where N and X are integers greater than or equal to 1

102

Determine, according to a block error rate, the X basic KPIs obtained after running with the i<sup>th</sup> value of the N network parameters and the X baseline basic KPIs , a gain corresponding to the i<sup>th</sup> value of the N network parameters

103

Determine, according to the gain corresponding to each value of the N network parameters, an optimal value of the N network parameters as the value corresponding to the maximum gain

FIG. 1

200

Narrow a value range of the N network parameters according to an interference scenario where the network is located

201

Determine the i$^{th}$ value of N network parameters of the network. The i$^{th}$ value of the N network parameters is in the narrowed value range, and i is an integer greater than or equal to 1

202

Determine, according to X basic KPIs obtained after running with the i$^{th}$ value of the N network parameters and X baseline basic KPIs , whether to update the X baseline basic KPIs. N and X are integers greater than or equal to 1

203

Determine, according to a block error rate, the X basic KPIs obtained after running with the i$^{th}$ value of the N network parameters and the X baseline basic KPIs , a gain corresponding to the i$^{th}$ value of the N network parameters

204

Determine, according to the gain corresponding to each value of the N network parameters, an optimal value of the N network parameters as the value corresponding to the maximum gain

FIG. 2

300

Identify an interference scenario according to an uplink background noise and a downlink background noise to obtain the interference scenario where the network is located

301

Narrow a value range of the N network parameters according to the interference scenario where the network is located

302

Determine the $i^{th}$ value of N network parameters of the network. The $i^{th}$ value of the N network parameters is in the narrowed value range, and i is an integer greater than or equal to 1

303

Determine, according to X basic KPIs obtained after running with the $i^{th}$ value of the N network parameters and X baseline basic KPIs , whether to update the X baseline basic KPIs. N and X are integers greater than or equal to 1

304

Determine, according to a block error rate, the X basic KPIs obtained after running with the $i^{th}$ value of the N network parameters and the X baseline basic KPIs , a gain corresponding to the $i^{th}$ value of the N network parameters

305

Determine, according to the gain corresponding to each value of the N network parameters, an optimal value of the N network parameters as the value corresponding to the maximum gain

FIG. 3

400

When all detection values of an uplink block error rate and a downlink block error rate within a preset time period are greater than or equal to a preset threshold, identify an interference scenario according to an uplink background noise and a downlink background noise to obtain the interference scenario where the network is located

401

Narrow a value range of the N network parameters according to the interference scenario where the network is located

402

Determine the $i^{th}$ value of N network parameters of the network. The $i^{th}$ value of the N network parameters is in the narrowed value range, and i is an integer greater than or equal to 1

403

Determine, according to X basic KPIs obtained after running with the $i^{th}$ value of the N network parameters and X baseline basic KPIs, whether to update the X baseline basic KPIs. N and X are integers greater than or equal to 1

404

Determine, according to a block error rate, the X basic KPIs obtained after running with the $i^{th}$ value of the N network parameters and the X baseline basic KPIs, a gain corresponding to the $i^{th}$ value of the N network parameters

405

Determine, according to the gain corresponding to each value of the N network parameters, an optimal value of the N network parameters as the value corresponding to the maximum gain

FIG. 4

FIG. 5

FIG. 6

<table>
<tr><td colspan="2" align="center">**INTERNATIONAL SEARCH REPORT**</td><td colspan="2">International application No.<br>**PCT/CN2020/086036**</td></tr>
</table>

**A.     CLASSIFICATION OF SUBJECT MATTER**

H04L 12/24(2006.01)i

According to International Patent Classification (IPC) or to both national classification and IPC

**B.     FIELDS SEARCHED**

Minimum documentation searched (classification system followed by classification symbols)

HO4L; H04W

Documentation searched other than minimum documentation to the extent that such documents are included in the fields searched

Electronic data base consulted during the international search (name of data base and, where practicable, search terms used)

CNTXT; CNABS; CNKI; 3GPP; DWPI; USTXT; VEN: 网络, 自适应, 配置, 基础KPI, 关键绩效指标, 窄带物联网, 基线KPI, 标准, 准线, 参考, 误块率, 增益, network, adaptive, configuration, KPI, NB-IoT, standard, reference, block error rate, gain

**C.     DOCUMENTS CONSIDERED TO BE RELEVANT**

| Category* | Citation of document, with indication, where appropriate, of the relevant passages | Relevant to claim No. |
|---|---|---|
| X | CN 101964985 A (INSTITUTE OF ACOUSTICS, CHINESE ACADEMY OF SCIENCES) 02 February 2011 (2011-02-02) description, paragraphs [0026]-[0076] | 1-15 |
| A | CN 103200624 A (TD TECH LTD.) 10 July 2013 (2013-07-10) entire document | 1-15 |
| A | CN 102904018 A (ZTE CORPORATION) 30 January 2013 (2013-01-30) entire document | 1-15 |
| A | US 10064099 B1 (AT & T INTELLECTUAL PROPERTY I, L.P.) 28 August 2018 (2018-08-28) entire document | 1-15 |

☐ Further documents are listed in the continuation of Box C.          ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 June 2020** | **13 July 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/086036**

| Patent document cited in search report | | | Publication date (day/month/year) | Patent family member(s) | | | Publication date (day/month/year) |
|---|---|---|---|---|---|---|---|
| CN | 101964985 | A | 02 February 2011 | CN | 101964985 | B | 13 November 2013 |
| CN | 103200624 | A | 10 July 2013 | CN | 103200624 | B | 25 November 2015 |
| CN | 102904018 | A | 30 January 2013 | CN | 102904018 | B | 21 December 2016 |
| US | 10064099 | B1 | 28 August 2018 | None | | | |

Form PCT/ISA/210 (patent family annex) (January 2015)